# EUROPEAN PATENT SPECIFICATION

(11) **EP 2 209 310 B1**
(45) Date of publication and mention of the grant of the patent: **08.02.2012**
(21) Application number: 08837662.9
(22) Date of filing: 25.08.2008
(51) Int. Cl.: H04N 5/92, G11B 20/10, H04N 7/173

(54) **VIDEO/AUDIO RECORDING/REPRODUCING APPARATUS**
AUFZEICHNUNGS-/WIEDERGABEGERÄT FÜR VIDEO/AUDIO
APPAREIL D'ENREGISTREMENT/REPRODUCTION VIDÉO/AUDIO

(30) Priority: 10.10.2007 JP 2007264091
(43) Date of publication of application: 21.07.2010
(73) Proprietor: Panasonic Corporation, Kadoma-shi Osaka 571-8501 (JP)
(72) Inventor: NAKATA, Haruhiko, c/o Panasonic Corporation, Chuo-ku Osaka 540-6207 (JP); TESHIMA, Hiroki, c/o Panasonic Corporation, Chu-ku Osaka 540-6207 (JP); OTSU, Nobumasa, c/o Panasonic Corporation, Chuo-ku Osaka 540-6207 (JP); DOHNO, Kunio, Panasonic Corporation, Chuo-ku Osaka 540-6207 (JP); SHIMIZU, Miki, c/o Panasonic Corporation, Chuo-ku, Osaka 540-6207 (JP); SHIMIZU, Yutaka, c/o Panasonic Corporation, Chuo-ku Osaka 540-6207 (JP); HIRAO, Kentaro, c/o Panasonic Corporation, Chuo-ku, Osaka 540-6207 (JP); IKEGAMI, Kosai, c/o Panasonic Corporation, Chuo-ku Osaka 540-6207 (JP)
(74) Representative: Grünecker, Kinkeldey, Stockmair & Schwanhäusser
(86) International application number: PCT/JP2008/002300
(87) International publication number: WO 2009/047877

(56) References cited:
- EP-A1- 1 737 225
- EP-A1- 1 737 228
- EP-A2- 1 069 782
- WO-A2-2005/084148
- JP-A- 2000 023 082
- JP-A- 2003 319 339
- JP-A- 2004 159 225
- JP-A- 2006 333 494
- US-A1- 2005 249 375

## Description

### TECHNICAL FIELD

The present invention relates to video/audio recording/reproducing apparatuses which record a transport stream containing subtitle information as a program stream.

### BACKGROUND ART

At present, DVD recorders employing a DVD or a hard disk as a recording medium are commonly and widely used as apparatuses for recording television-broadcast video and audio information (video/audio recording/reproducing apparatuses). Some of such recording apparatuses record subtitle information contained in a television broadcast (transport stream) as a program stream of subtitle information. For example, subtitle information superimposed during vertical blanking intervals of television broadcasting may be extracted and converted into bitmap data, the bitmap data is run-length compressed, and the resultant data is recorded as a program stream of subtitle information (see, for example, Patent Document 1).

### CITATION LIST

### PATENT DOCUMENT

PATENT DOCUMENT 1: Japanese Patent Laid-Open Publication No. 2000-23082

### SUMMARY OF THE INVENTION

### TECHNICAL PROBLEM

However, conventional video/audio recording/reproducing apparatuses do not support digital television broadcasting having no vertical blanking interval. Therefore, when a transport stream of digital television broadcasting is converted into a program stream, and the program stream is recorded, subtitle information contained in the transport stream is recorded as a portion of video information in the program stream. In this case, it is not possible to switch between displaying and hiding the subtitle information during reproduction, which is a problem.

When there are a plurality of pieces of subtitle information, only subtitle information that is selected during recording can be recorded, and languages to be displayed during reproduction cannot be selected, which is another problem.

The present invention has been made to solve the aforementioned problems. It is an object of the present invention to make it possible to switch between displaying and hiding subtitle information and select languages to be displayed, when video and audio information contained in a transport stream which has been recorded as a program stream is reproduced.

Patent document EP 1 737 225 relates to an information recording medium capable of converting a stream including seamless connection, which is recorded in a constrained format allowing format conversion from a first format (MPEG-TS) to a second format (MPEG-PS), into a second stream, and an apparatus and method for recording information in the information recording medium. The constrained format is provided for enabling conversion from a first format (for example, MPEG transport stream) to a second format (for example, MPEG program stream). Seamless playback is performed by using a third system stream (Bridge-VOB), which is composed of each of the parts the two seamlessly connected system streams. A video information presentation time by data management unit (Capsule) at a third system stream terminal is greater then or equal to 0.4 second and less than or equal to 1 second, according to the constrained format.

Patent document WO 2005/084148 relates to text subtitle streams which are reproduced based on register values contained in one or more player status registers included in a player. A SubPlayltem, which designates at least one text subtitle stream and is included in a PlayList recorded on a recording medium, is read. A first register value specifying one of the at least one text subtitle stream is stored in a first player status register included in the player. Next, a second register contained in a second player status register included in the player is read to determine whether the player is capable of decoding text subtitle streams. If the player's decoding capability is indicated, the text subtitle stream specified by the first register value is decoded.

### SOLUTION TO THE PROBLEM

To achieve the object, in the present invention, subtitle information contained in transport stream is converted into a program stream of subtitle information, and the program stream of subtitle information is recorded.

For example, a video/audio recording/reproducing apparatus according to an embodiment of the present invention is provided for recording an MPEG transport stream of subtitle information in a single or a plurality of languages into a storage medium, comprising: a stream input unit configured to receive an MPEG transport stream containing program specifying information, subtitle information, and video/audio information; a subtitle information extracting unit configured to separate the MPEG transport stream received by the stream input unit into the subtitle information and the information other than the subtitle information; a stream format converting unit configured to convert the video/audio information of the MPEG transport stream separated by the subtitle information extracting unit into a program stream of video/audio, a subtitle format converting unit configured to convert the subtitle information separated by the subtitle information extracting unit into an MPEG program stream of subtitle information; a subtitle information inserting unit configured to insert the subtitle information converted by the subtitle format converting unit, into the MPEG program stream converted by the stream format converting unit; and a data recording unit configured to record the MPEG program stream output by the subtitle information inserting unit.

As a result, initially, a transport stream of video/audio information is converted into a program stream of video/audio by the stream format converting unit. Also, subtitle information in a single or a plurality of languages is converted into a program stream of subtitle information. Thereafter, the program stream of subtitle information is inserted into the program stream of video/audio, and the resultant program stream of video/audio is recorded. In other words, subtitle information contained in a transport stream is converted into a program stream of subtitle information, and the program stream of subtitle information is recorded.

### ADVANTAGES OF THE INVENTION

According to the present invention, subtitle information contained in a transport stream is converted into a program stream of subtitle information, and the program stream of subtitle information is recorded. Therefore, it is possible to switch between displaying and hiding the subtitle information and select languages to be displayed during playback,

### BRIEF DESCRIPTION OF THE DRAWING

FIG. 1 is a block diagram showing a configuration of a video/audio recording/reproducing apparatus 101 according to Embodiment 1 of the present invention.
FIG. 2 is a diagram showing a PES packet format of Subtitle which is transmitted in MPEG2-TS streams.
FIG. 3 is a diagram showing a format of a page composition segment.
FIG. 4 is a diagram showing a format of a region composition segment for a bitmap object.
FIG. 5 is a diagram showing a formant of a CLUT definition segment.
FIG. 6 is a formant of an object composition segment for a bitmap object.
FIG. 7 is a diagram showing a screen configuration in which Subtitle is displayed.
FIG. 8 is a diagram showing a sub picture format in DVD-VR streams.
FIG. 9 is a diagram showing an assignment table for pixel data of a sub picture.
FIG. 10 is a diagram showing a display control command format for determining color information of a sub picture.
FIG. 11 is a diagram showing a CLUT definition format of a sub picture.
FIG. 12 is a diagram showing a list of display control commands for a sub picture.
FIG. 13 is a diagram showing a display control command format for determining a display position of a sub picture.
FIG. 14 is a diagram showing a method of converting a 16-color CLUT into a 4-color CLUT.
FIG. 15 is a method showing a method of converting a 256-color CLUT into a 4-color CLUT.
FIG. 16 is a diagram showing table IDs of a 256-color CLUT designated by pixel data.
FIG. 17 is a diagram showing a method of reducing the number of table IDs of a

CLUT designated by pixel data to four colors.
FIG. 18 is a diagram showing table IDs of a CLUT designated by pixel data, where the number of table IDs has been reduced to four colors.
FIG. 19 is a diagram showing a plurality of subtitle rectangular regions in Embodiment 2.
FIG. 20 is a diagram showing a method of inserting a sub picture pack in Embodiment 3.

### DESCRIPTION OF REFERENCE CHARACTERS

- 101: Video/Audio Recording/Reproducing Apparatus
- 102: Stream Input Unit
- 103: Program Specifying Information Acquiring Unit
- 104: Subtitle Information Extracting Unit
- 105: Stream Format Converting Unit
- 106: Time Information Acquiring Unit
- 107: Subtitle Format Converting Unit
- 108: Subtitle Information Inserting Unit
- 109: Data Recording Unit
- 201: Display Screen
- 202: Subtitle Rectangular Region
- 203: Subtitle Rectangular Region
- 204: Border Line
- 301: Program Stream
- 301a, 301b, 301c: Video Pack
- 301d, 301 e, 301f: Audio Pack
- 302: Sub Picture Pack

### DESCRIPTION OF EMBODIMENTS

Embodiments of the present invention will be described hereinafter with reference to the accompanying drawings. Note that, in the description of the embodiments below, components having similar functions are indicated by the same reference characters and are not repeatedly described.

### «Embodiment 1 of the Invention»

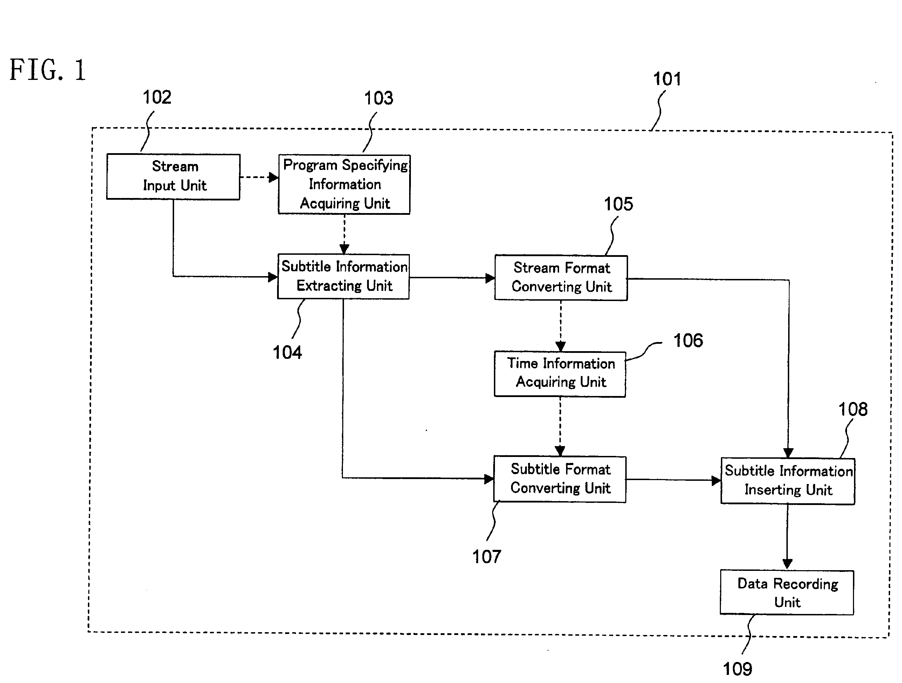

FIG. 1 is a block diagram showing a configuration of a video/audio recording/reproducing apparatus 101 according to Embodiment 1 of the present invention. The video/audio recording/reproducing apparatus 101 receives a transport stream containing video, audio, data, and subtitle information, and records or reproduces the transport stream as a program stream. In the description that follows, the transport stream input to the video/audio recording/reproducing apparatus 101 is assumed to be an MPEG2-TS (Transport Stream).

### - Configuration of Video/Audio Recording/Reproducing Apparatus 101 -

The video/audio recording/reproducing apparatus 101 includes a stream input unit 102, a program specifying information acquiring unit 103, a subtitle information extracting unit 104, a stream format converting unit 105, a time information acquiring unit 106, a subtitle format converting unit 107, a subtitle information inserting unit 108, and a data recording unit 109.

The stream input unit 102 receives an MPEG2-TS (Transport Stream) containing subtitle information output from a digital television broadcasting antenna, a player or the like, and outputs the received MPEG2-TS to the program specifying information acquiring unit 103 and the subtitle information extracting unit 104.

The program specifying information acquiring unit 103 acquires program specifying information which is contained in the MPEG2-T output by the stream input unit 102. In this example, the program specifying information acquiring unit 103 acquires a PAT (Program Association Table) and a PMT (Program Map Table) as program information. The program specifying information acquiring unit 103 also acquires PIDs (Packet IDs) which are identification information about video, audio, data, and subtitles, and information about the number of subtitle streams.

The subtitle information extracting unit 104 separates the MPEG2-TS received by the stream input unit 102 into TS packets of subtitle information (Subtitle) and TS packets of video and audio, based on the PIDs for video, audio, data, and subtitles which have been acquired by the program specifying information acquiring unit 103. In this case, the subtitle information extracting unit 104 extracts reproduction time control information. In this example, the reproduction time control information is a leading PTS (Presentation Time Stamp) of an MPEG2-TS from which recording operation of a digital television broadcast is started. The subtitle information extracting unit 104 notifies the subtitle format converting unit 107 of the reproduction time control information, and the number of pieces of subtitle identification information acquired from the program specifying information acquiring unit 103.

The stream format converting unit 105 converts the TS packets of video and audio separated by the subtitle information extracting unit 104 into an MPEG2-PS (Program Stream) conforming to the DVD-VR (Video Recording) standards. In this case, the stream format converting unit 105 inserts, into the converted MPEG2-PS, an empty pack for inserting a sub picture pack which is to be recorded as subtitle information. The empty pack is generated by back calculation from the recording rate of a video/audio stream of the MPEG2-PS so that the continuity between an SCR (System Clock Reference) of each packet of the MPEG2-PS is maintained for the number of packets allowed within a range which is limited by a maximum recording rate which is specified in the DVD-VR standards.

The time information acquiring unit 106 acquires the leading PTS of the MPEG2-PS converted by the stream format converting unit 105.

The subtitle format converting unit 107 converts the TS packets of Subtitle extracted by the subtitle information extracting unit 104 into a sub picture pack which is an MPEG2-PS of subtitle information. The details of the conversion method will be described later.

The subtitle information inserting unit 108 inserts information (a packet header, sub_stream_Id, sub picture data) other than the pack header of the empty pack inserted by the stream format converting unit 105, into the sub picture pack converted by the subtitle format converting unit 107.

The data recording unit 109 records the MPEG2-PS containing the sub picture pack output by the subtitle information inserting unit 108 into a storage medium (e.g., a DVD-RAM).

### (Conversion Method in Subtitle Format Converting Unit 107)

The subtitle format converting unit 107, when Subtitle is an image (bitmap image), decompresses the bitmap image which is a run-length compressed MPEG2-TS, and run-length compresses the resultant bitmap image into a sub picture pack which is an MPEG2-PS again.

The subtitle format converting unit 107, when Subtitle is character information (character code), also converts a character code of Subtitle into a bitmap image using font data possessed by the video/audio recording/reproducing apparatus 101, and run-length compresses the bitmap image into a sub picture pack which is an MPEG2-PS.

The subtitle format converting unit 107 also converts a CLUT (Color Look Up Table) which is color display information of Subtitle, into a CLUT which is color display information of a sub picture conforming to the DVD-VR standards.

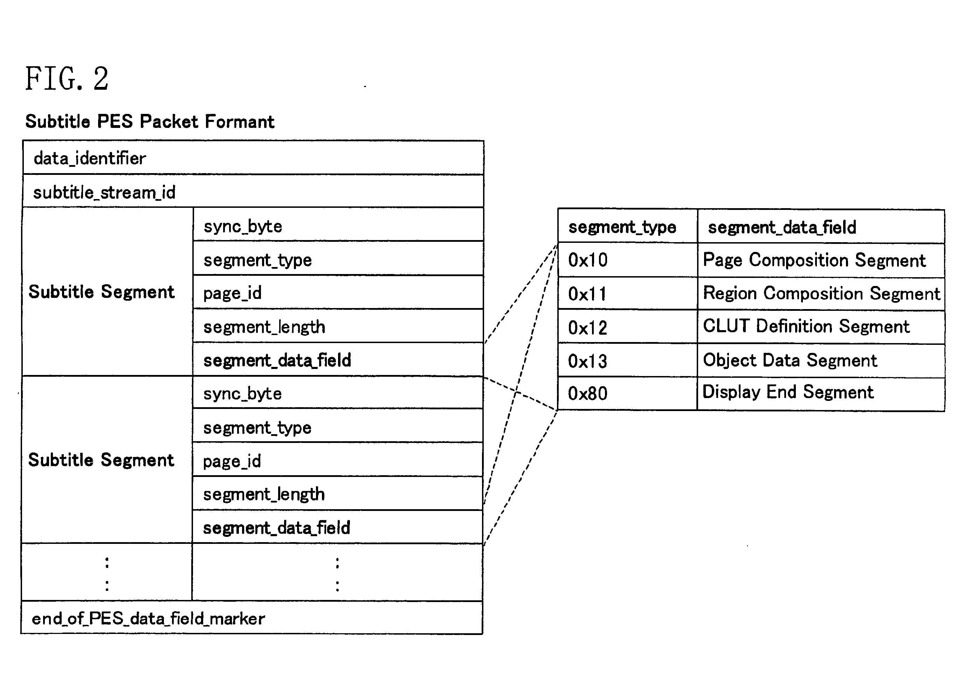

Here, Subtitle conforming to the DVB-T standards which is contained in MPEG2-TS streams will be described. FIG. 2 shows a PES packet format of Subtitle which is transmitted in MPEG2-TS streams.

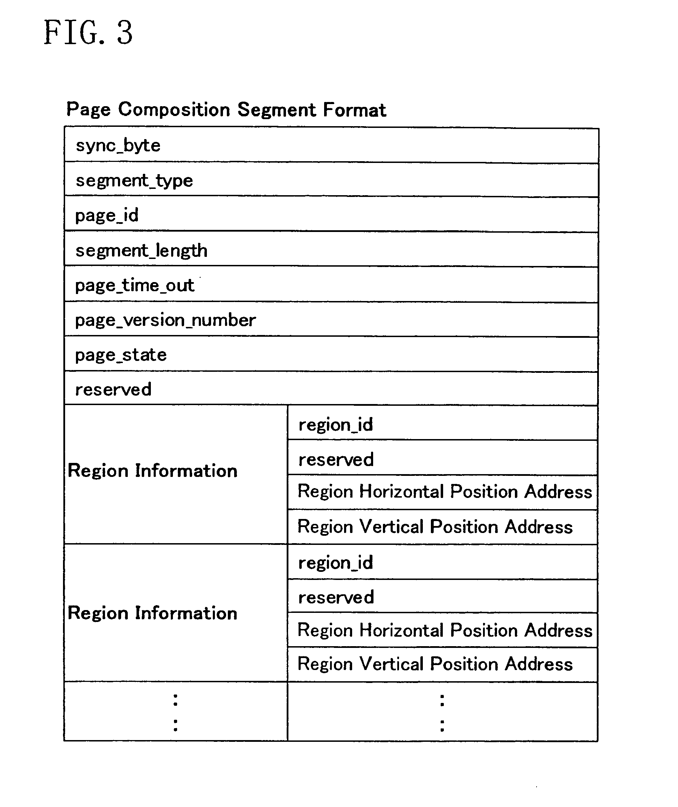

As shown in FIG. 2, a PES packet of Subtitle includes a page composition segment, a region composition segment, a CLUT definition segment, and an object data segment. FIGS. 3, 4, 5, and 6 show the format of the page composition segment, the format of the region composition segment in the case of a bitmap object, the format of the CLUT definition segment, and the format of the object data segment in the case of a bitmap object.

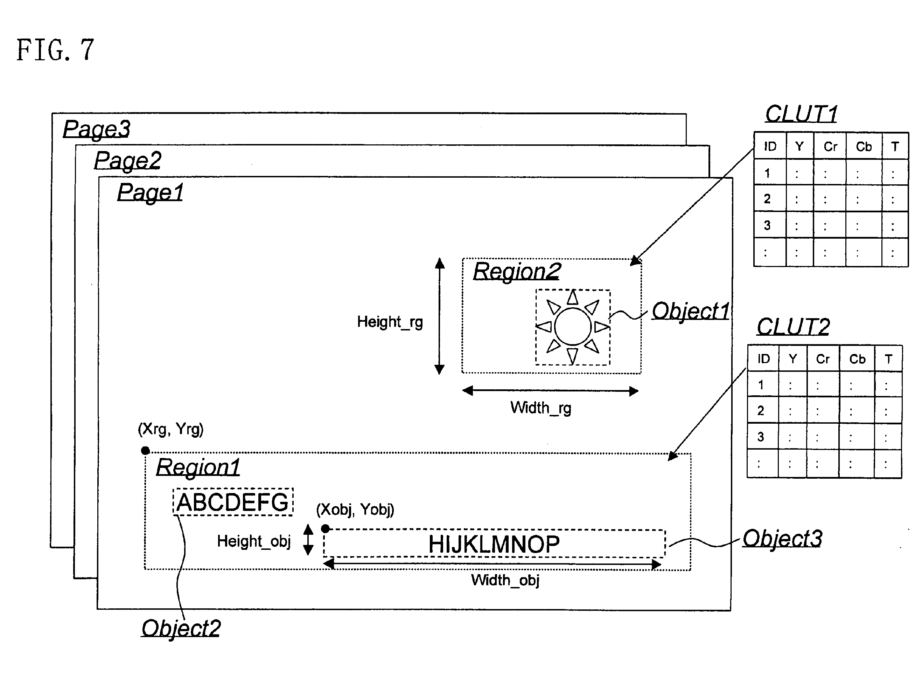

Here, as shown in FIG. 7, a screen configuration of Subtitle display includes a page, a region, and an object. A CLUT is defined for each region.

Pages are defined by data in the composition format (see FIG. 3). Each page can have a plurality of regions. Each region is identified by a region_id. A position (Xrg, Yrg) of each region is determined by a region horizontal position address and a region vertical position address in region information.

When a plurality of pages are present, any of the plurality of pages is displayed. A displayed page is switched to another page by selection by the user or the like. Specifically, a plurality of Subtitles in different languages are assigned to respective corresponding pages. When the Subtitle languages are switched, operation of switching the pages is performed.

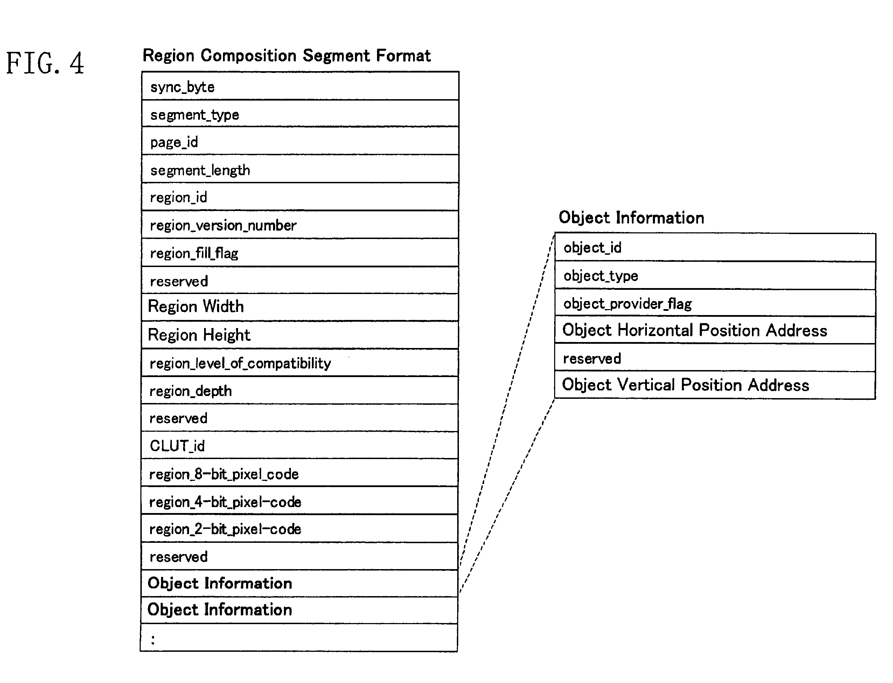

Regions are defined by data in the region composition segment format (see FIG. 4). A size (Width_rg, Height_rg) of a region is determined by a region width and a region height. A CLUT is defined for each region. A CLUT_id identifies a corresponding CLUT.

Moreover, each region can have a plurality of objects, which are identified by corresponding object_ids. A relative position (Xobj, Yobj) of an object in a region is determined by a horizontal position address and a vertical position address in object information.

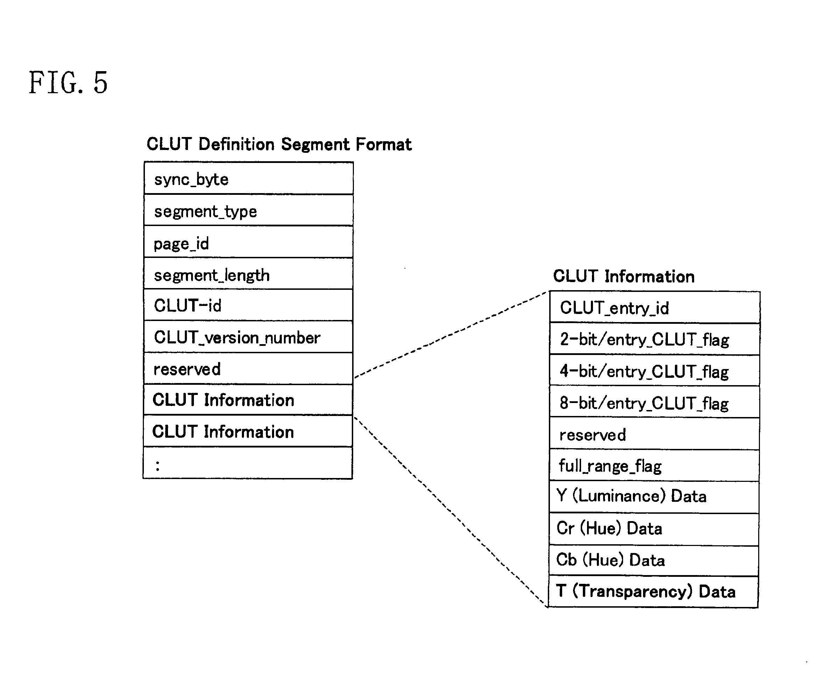

CLUTs are defined by data in the CLUT definition segment format (see FIG. 5). For each CLUT_id, table data including Y (luminance) data, Cr (hue) data, Cb (hue) data, and T (transparency) data is provided in association with a CLUT_entry_id. Object data includes pixel data using a CLUT_entry_id, and a color corresponding to the object data is determined from the CLUT.

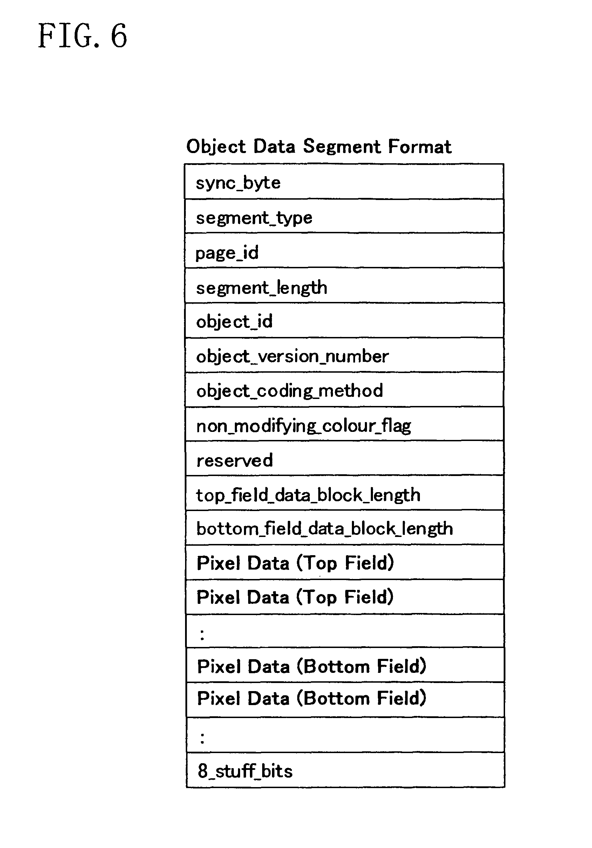

Objects are defined by data in the object data segment format (see FIG. 6). Pixel data, which is a substantial portion of each object, is run-length compressed data. The data is decompressed and supplied to a display area so that Subtitle is drawn.

Display is performed at a timing that an STC (System Time Clock) coincides with a PTS added to the packet header of a PES (Packetized Elementary Stream) of Subtitle. The STC is generated by a PCR (Program Clock Reference) transported in an MPEG2-TS stream. The page composition segment includes a "page_time_out" which is used to erase the display of an entire page.

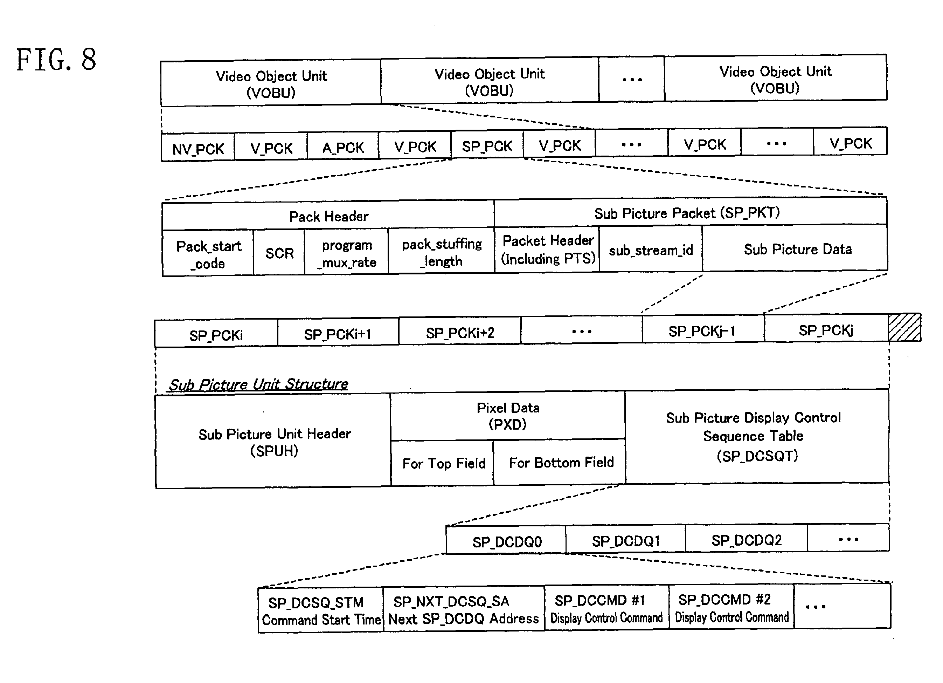

Next, sub pictures conforming to the DVD-VR (Video Recording) standards will be described with reference to FIG. 8. DVD-VR streams each include a plurality of VOBUs (Video object Units). Sub picture data is embedded as an SP_PCK in each VOBU. A unit of sub picture data contained in one VOBU is a sub picture unit.

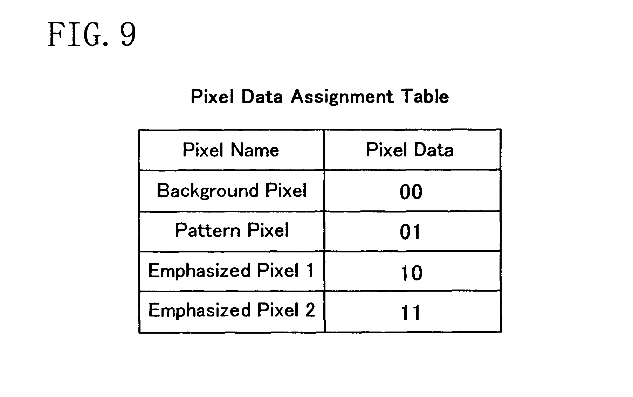

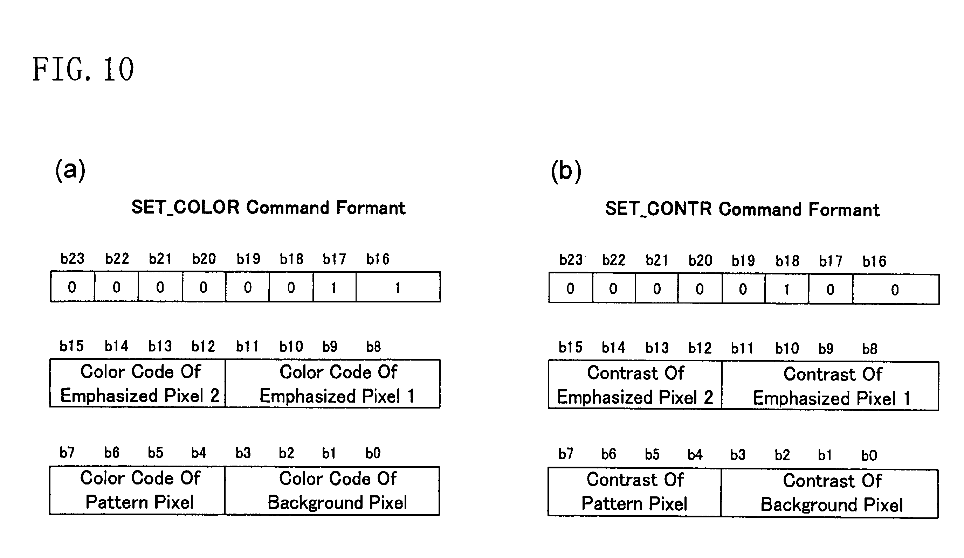

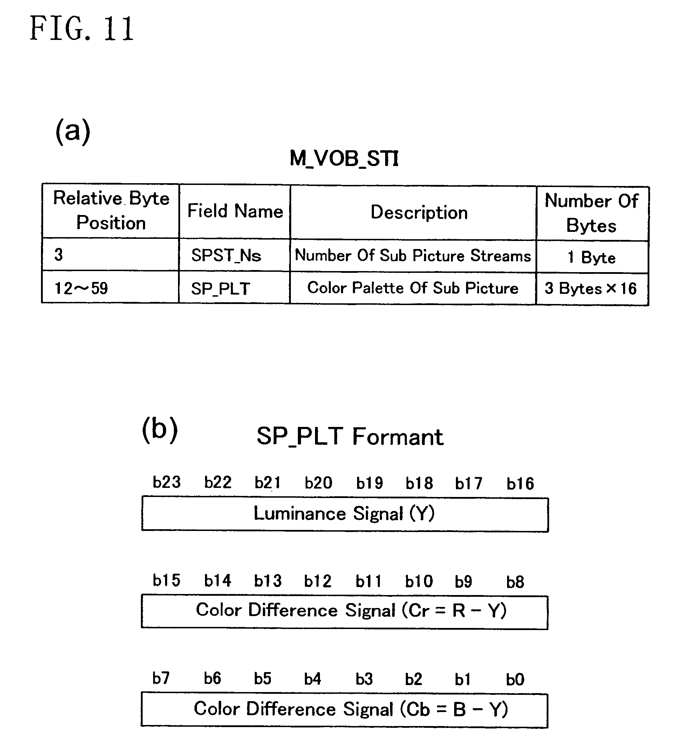

A PXD contained in each sub picture unit is the run-length compressed version of a sub picture to be displayed. The PXD is a set of data in which each two bits expresses one pixel as shown in FIG. 9. The pixel data of FIG. 9 is expressed by a color code of a SET_COLOR command and a contrast of a SET_CONTR command described in FIG. 10. The color code corresponds to Y, Cr, and Cb of a CLUT of an SP_PLT defined in M_VOB_STI (VOB stream information: RTR_VMG -> M_AVFIT -> M_VOB_STI) shown in FIG. 11. The contrast is used as data indicating a mixture ratio with respect to main video. In other words, two-bit pixel data included in the PXD is eventually converted into Y, Cr, Cb and a contrast.

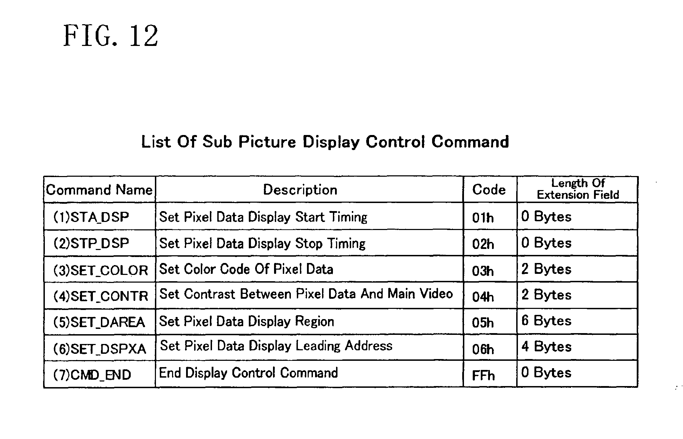

FIG. 12 shows a list of sub picture display control commands. The display timing of a sub picture is controlled by an STA_DSP command and an STP_DSP command shown in FIG. 12. The STA_DSP command is executed at a timing that a time which is obtained by adding an SP_DCSQ_STM (command start time) of an SP_DCDQ to a PTS added to a sub picture packet of FIG. 8 coincides with an STC, thereby displaying a sub picture. Similarly, the STP_DSP command is executed at a timing that a time which is obtained by adding an SP_DCSQ_STM (command start time) of an SP_DCDQ to a PTS added to a sub picture packet coincides with an STC, thereby erasing a sub picture.

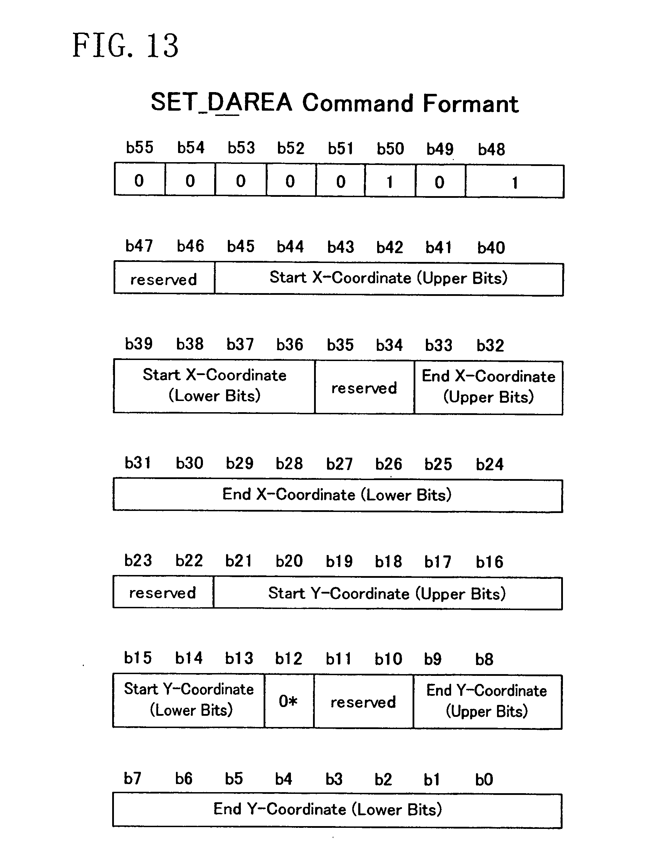

A display position of a sub picture is controlled by a SET_DAREA command shown in FIG. 13. A sub picture is displayed in a rectangular region indicated by the X and Y coordinates of the start and end of this command.

When a plurality of sub picture streams are present, the number of sub picture streams is defined by an SPST_Ns defined in M_VOB_STI (VOB stream information: RTR_VMG -> M_AVFIT -> M_VOB_STI) of FIG. 11, and the sub picture streams are identified by sub_stream_ids in an SP_PCK of FIG. 8. Sub pictures in different languages can be displayed by designating corresponding sub_stream_ids.

These basic sub picture control methods are similar to those in the DVD -Video standards.

A method of converting Subtitle conforming to the DVB-T standards into a sub picture conforming to the DVD-VR standards will be described hereinafter.

The number of sub picture streams needs to be designated to an SPST_Ns. Therefore, the number of streams of Subtitle contained in an MPEG2-TS acquired from the program specifying information acquiring unit 103 is designated to the SPST_Ns.

A sub_stream_id needs to be assigned to each sub picture. Sub_stream_ids are each 8-bit data, which needs to be in the format "0b001***** (* indicates any of 0 or 1)" in binary notation. Therefore, the numbers 1, 2, 3 and so on are assigned to "*****" in this stated order, depending on the number of streams of Subtitle contained in an MPEG2-TS acquired from the program specifying information acquiring unit 103.

Next, a method of generating a display region of a sub picture will be described. A display position and a display range of a region are acquired from a region horizontal position address and a region vertical position address indicated in the page composition segment format and a region width and a region height indicated in the region composition segment format, and are converted into a sub picture display control command SET_DAREA conforming to the DVD-VR standards. The region horizontal position address is set to the start X-coordinate of SET_DAREA, and a value which is obtained by adding the region width to the region horizontal position address is set to the end X-coordinate of SET_DAREA. The region vertical position address is set to the start Y-coordinate of SET_DAREA, and a value which is obtained by adding the region height to the region vertical position address is set to the end Y-coordinate of SET_DAREA.

When a plurality of regions are simultaneously displayed, the smallest value of the horizontal position addresses of the regions is set to the start X-coordinate of SET_DAREA, and the greatest one of the values which are obtained by adding the horizontal position addresses of the regions to the region widths of the regions is set to the end X-coordinate of SET_DAREA. The smallest value of the vertical position addresses of the regions is set to the start Y-coordinate of SET_DAREA, and the greatest one of the values which are obtained by adding the vertical position addresses of the regions to the region heights of the regions is set to the end Y-coordinate of SET_DAREA.

Next, a method of generating a display time of a sub picture will be described. In the DVB-T standards, subtitles are displayed in synchronization with a PTS in a stream. Therefore, also in the DVD-VR standards, the display of a sub picture may be started in synchronization with a PTS in a stream. Therefore, the SP_DCSQ_STM is set to 0 so that the SP_DCSQ_STM is the same time as a PTS at which a sub picture is contained. By executing the STA_DSP command at the SP_DCSQ_STM time, the sub picture is displayed in synchronization with the PTS. A page_time_out time is used as a display end time. The page_time_out time is expressed in Subtitle by an offset from a time that display is started. Therefore, the SP_DCSQ_STM is set to a value which is calculated in units of 90 KHz so that the SP_DCSQ_STM is the same time as the page_time_out, and the STP_DSP command is executed at the SP_DCSQ_STM time.

Next, a method of generating color display information about a sub picture will be described. The color display information used in Subtitle is specified in CLUT information corresponding a CLUT_id in a region composition segment.

It is determined whether a CLUT used in Subtitle is a 4-color CLUT, a 16-color CLUT, or a 256-color CLUT, based on a 2-bit/entry_CLUT_flag, a 4-bit/entry_CLUT_flag, and an 8-bit/entry_CLUT_flag of the CLUT information. If the 2-bit/entry_CLUT_flag is true, the CLUT is a 4-color CLUT. If the 4-bit/entry_CLUT_flag is true, the CLUT is a 16-color CLUT. If the 8-bitlentry_CLUT_flag is true, the CLUT is a 256-color CLUT. When the CLUT is a 16-color or 256-color CLUT, the CLUT is converted into a 4-color CLUT.

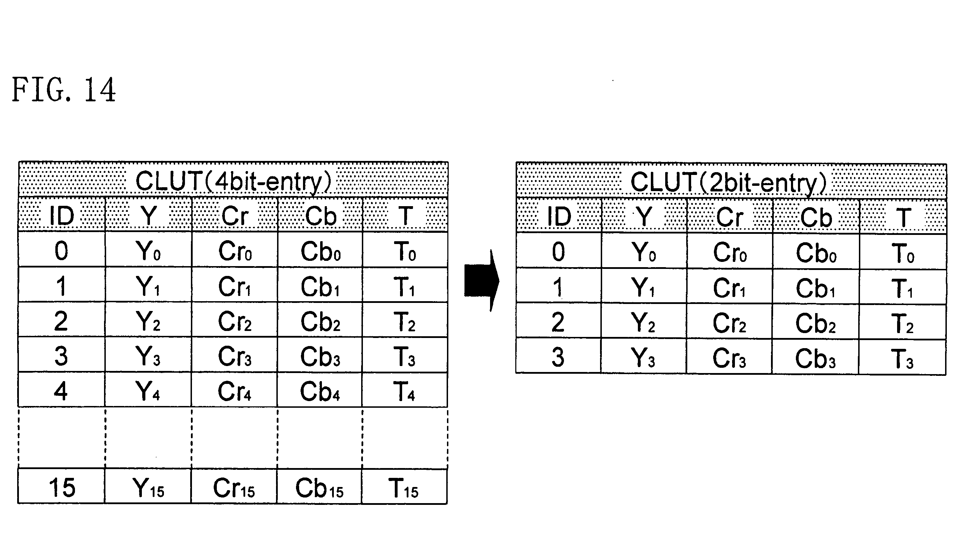

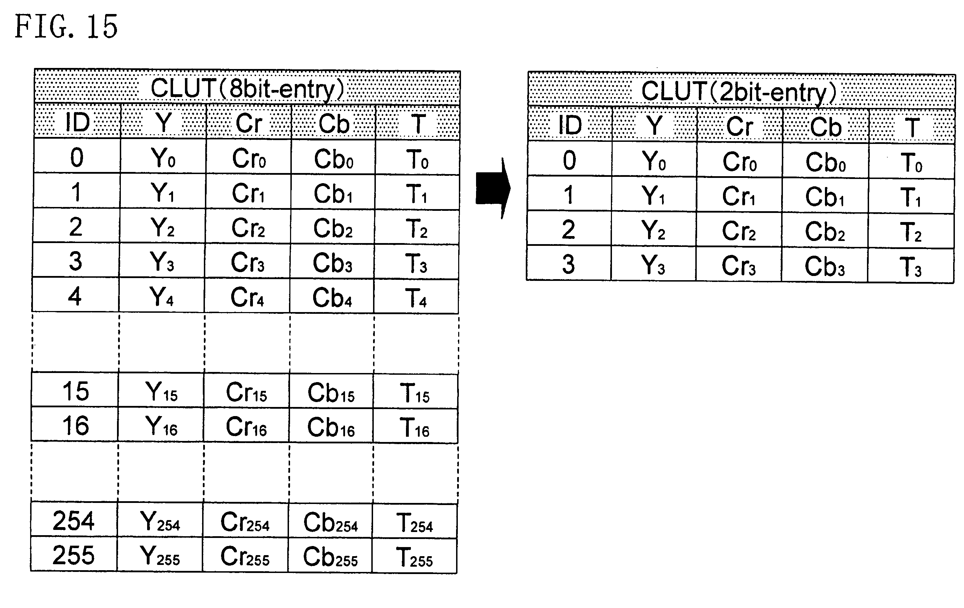

FIG. 14 shows a method of converting a 16-color CLUT into a 4-color CLUT. FIG. 15 shows a method of converting a 256-color CLUT into a 4-color CLUT. In both cases, color information (Y/Cr/Cb/T) located at tables corresponding to the IDs 0, 1, 2, and 3 of a CLUT is used as a 4-color CLUT.

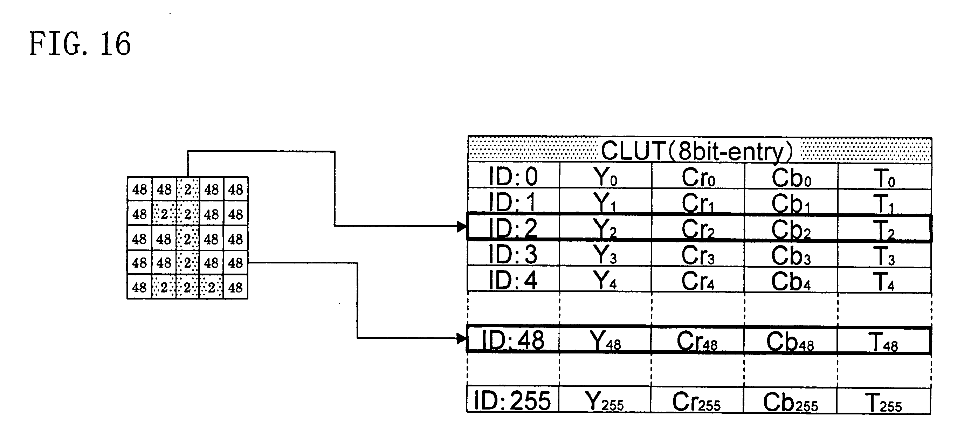

FIG. 16 is a diagram showing a relationship between table IDs of a CLUT indicated by pixel data contained in the object data segment of Subtitle, and the CLUT. Here, the CLUT designated by the CLUT_id of a region composition segment is assumed to be an 8-bit/entry (a 256-color CLUT). When a CLUT is converted into one which is used for a sub picture, a table ID of the CLUT designated by pixel data is also converted because the number of colors of the CLUT is reduced to four.

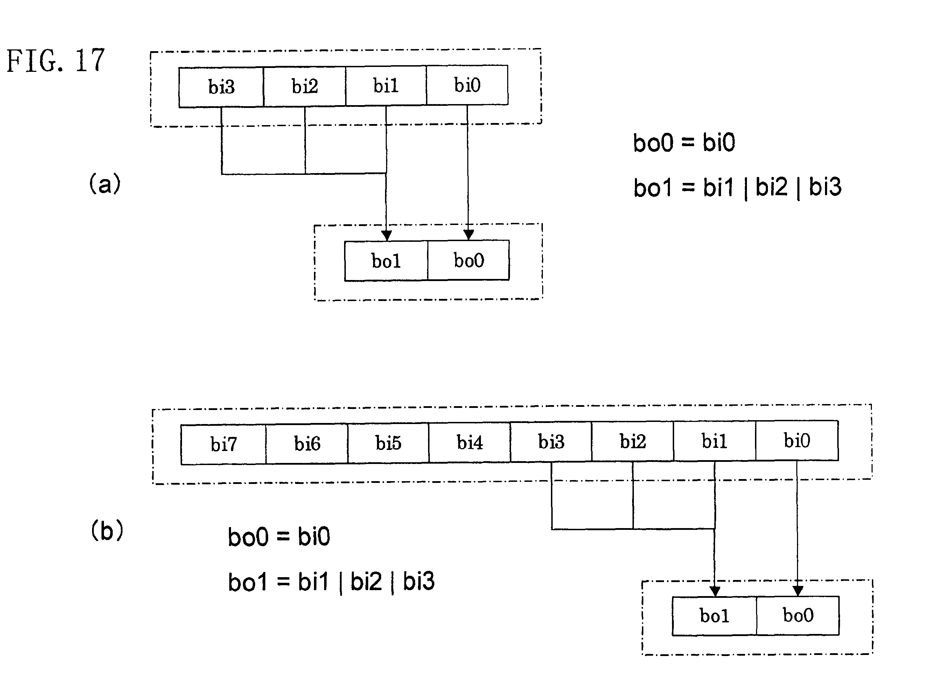

FIG. 17 shows a method of converting a table ID of a CLUT designated by pixel data. A portion (a) of FIG. 17 shows a method of converting a table ID of a CLUT designated by pixel data when a 16-color CLUT is converted into a 4-color CLUT. A portion (b) of FIG. 17 shows a method of converting a table ID of a CLUT designated by pixel data when a 256-color CLUT is converted into a 4-color CLUT.

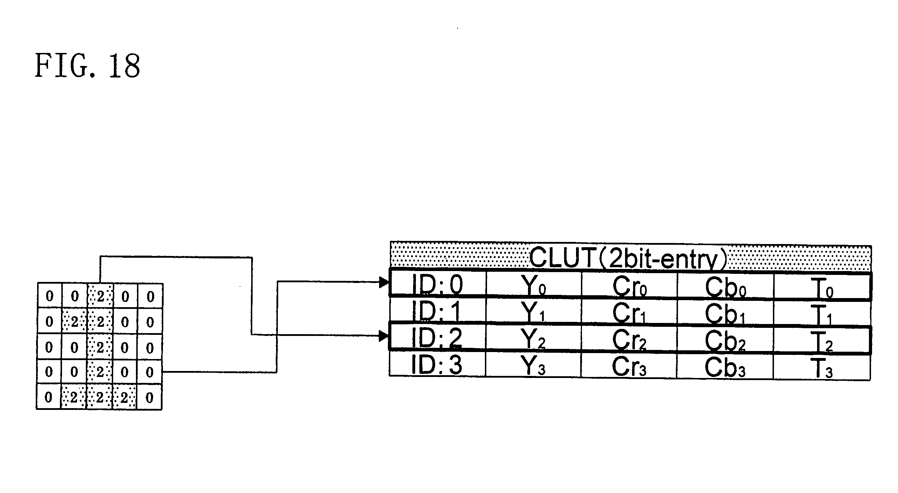

FIG. 18 shows the result from the conversion of a table ID of a CLUT designated by pixel data of FIG. 16. A table ID of a CLUT designated by pixel data is converted into a table ID of a CLUT having a reduced number of colors (i.e., a 4-color CLUT) by using the conversion method of FIG. 17.

The CLUT having a reduced number of colors (i.e., a 4-color CLUT) of Subtitle, when being converted into a CLUT of a sub picture, is inserted to an SP_PLT of a sub picture pack, excluding T, by the subtitle format converting unit 107.

A color of a sub picture is actually designated as follows. The four colors of the converted CLUT are assigned as color codes of SET_COLOR commands to a background color, a pattern color, an emphasized color 1, and an emphasized color 2. A value of T of a CLUT corresonding to a color designated by each SET_COLOR command is used as a SET_CONTR command.

A method of determining a PTS for a sub picture will be described hereinafter. A PTS for a sub picture pack of an MPEG2-PS generated by the subtitle format converting unit 107 is determined by subtracting a difference between the leading PTS of the MPEG2-TS extracted by the subtitle information extracting unit 104 and the leading PTS of the MPEG2-PS acquired by the time information acquiring unit 106 from the PTS for the sub picture pack of the MPEG2-PS generated by the subtitle format converting unit 107.

### - Operation of Video/Audio Recording/Reproducing Apparatus 101 -

In the video/audio recording/reproducing apparatus 101, the stream input unit 102 receives an MPEG2-TS and outputs the received MPEG2-TS to the program specifying information acquiring unit 103 and the subtitle information extracting unit 104.

The program specifying information acquiring unit 103 receives the output of the stream input unit 102 and acquires a PAT and a PMT contained in the MPEG2-TS. The program specifying information acquiring unit 103 also acquires PIDs which are identification information about video, audio, data, and subtitles, and information about the number of subtitle streams.

The subtitle information extracting unit 104 separates the MPEG2-TS into TS packets of Subtitle (subtitle information) and TS packets of video and audio, based on the PIDs acquired by the program specifying information acquiring unit 103. In this case, the subtitle information extracting unit 104 also extracts the leading PTS of the MPEG2-TS.

The stream format converting unit 105 receives the output of the subtitle information extracting unit 104, and converts the TS packets of video/audio separated by the subtitle information extracting unit 104 into an MPEG2-PS conforming to the DVD-VR standards. In this case, the stream format converting unit 105 inserts, into the converted MPEG2-PS, an empty pack for inserting a sub picture pack which is to be recorded as subtitle information.

The time information acquiring unit 106 acquires the leading PTS of the MPEG2-PS converted by the stream format converting unit 105.

The subtitle format converting unit 107 converts the TS packets of Subtitle extracted by the subtitle information extracting unit 104 into a sub picture pack which is an MPEG2-PS of subtitle information. In this case, in order to determine the PTS for the sub picture, the leading PTS of the MPEG2-TS extracted by the subtitle information extracting unit 104 and the leading PTS of the MPEG2-PS acquired by the time information acquiring unit 106 are used.

The subtitle information inserting unit 108 inserts information (a packet header, a sub_stream_Id, sub picture data) other than the pack header of the empty pack inserted by the stream format converting unit 105, into the sub picture pack converted by the subtitle format converting unit 107. As a result, the subtitle information inserting unit 108 outputs an MPEG2-PS containing the sub picture pack.

The data recording unit 109 recordes the MPEG2-PS output by the subtitle information inserting unit 108 to a storage medium (in this example, a DVD-RAM).

As described above, according to this embodiment, subtitle information contained in a transport stream is converted into a program stream of subtitle information, and the program stream of subtitle information is recorded. Therefore, it is possible to switch between displaying and hiding the subtitle information and select languages to be displayed during reproduction.

### «Embodiment 2 of the Invention»

A video/audio recording/reproducing apparatus according to Embodiment 2 of the present invention converts only specific subtitles into a sub picture pack, and records the sub picture pack.

The video/audio recording/reproducing apparatus of Embodiment 2 has the same components as those of the video/audio recording/reproducing apparatus 1.01 (Embodiment 1), but the subtitle format converting unit 107 has a different function. Specifically, the subtitle format converting unit 107 of this embodiment, when recording a sub picture conforming to the DVD-VR standards, converts only a subtitle rectangular region (Subtitle rectangular region) located below a designated border line into a sub picture pack.

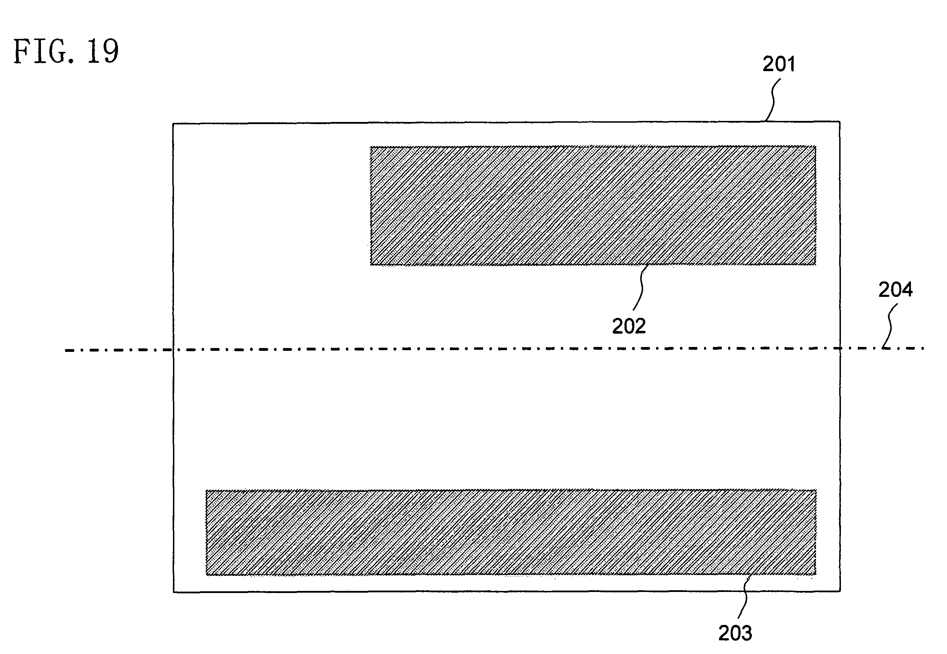

For example, FIG. 19 shows example subtitles broadcast by digital television broadcasting. In this example, two subtitle rectangular regions 202 and 203 are provided on a display screen 201. If a border line 204 is designated as the aforementioned border line, the video/audio recording/reproducing apparatus of this embodiment converts only the subtitle rectangular region 203 (Subtitle rectangular region) located below the border line 204 into a sub picture pack.

Therefore, according to this embodiment, subtitle information to be recorded into a storage medium can be selected and recorded by converting only subtitle information located within a specific range into a sub picture pack.

Note that a subtitle rectangular region to be recorded is selected based on a designated border line in this embodiment. Alternatively, a subtitle rectangular region to be recorded may be selected based on a display range or the area of the subtitle rectangular region.

### «Embodiment 3 of the Invention»

A video/audio recording/reproducing apparatus according to Embodiment 3. of the present invention inserts a sub picture pack into an MPEG2-PS without generating an empty pack in the stream format converting unit 105. The video/audio recording/reproducing apparatus of Embodiment 3 has the same components as those of the video/audio recording/reproducing apparatus 101 (Embodiment 1), but the subtitle information inserting unit 108 has a different function.

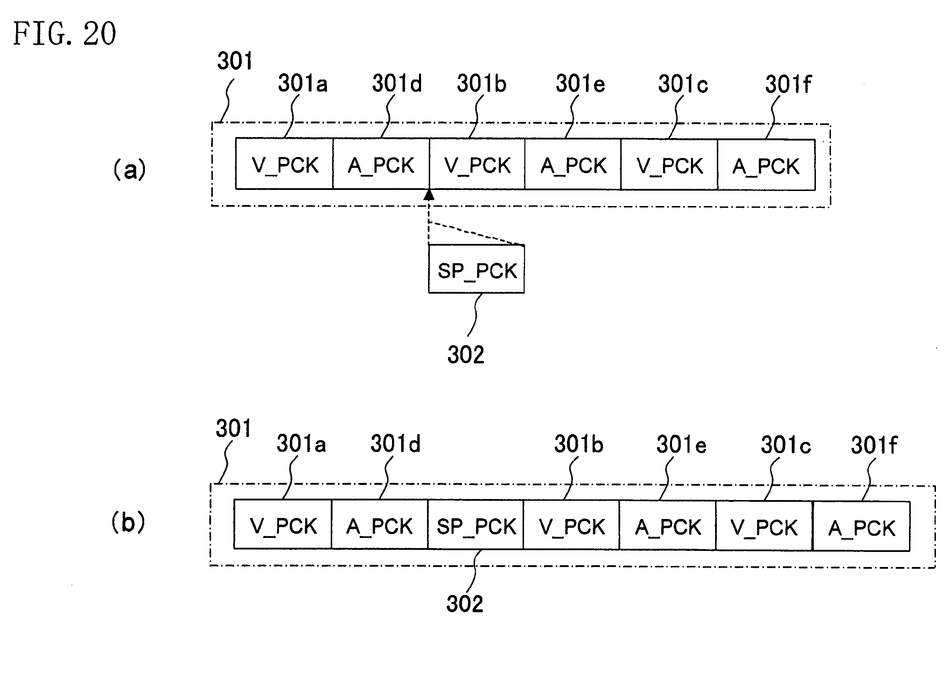

FIG. 20 shows a method of inserting a sub picture pack into an MPEG2-PS in this embodiment.

A program stream 301 shown in FIG. 20 is an MPEG2-PS generated by the stream format converting unit 105. A sub picture pack 302 (SP_PCK) is one which is generated by the subtitle format converting unit 107. In the program stream 301, video packs 301a, 301b, and 301 (V_PCKs) are video information, and audio packs 301d, 301e, and 301f (A_PCKs) are audio information. A portion (a) of FIG. 20 indicates an MPEG2-PS before inserting the sub picture pack 302, and a portion (b) of FIG. 20 indicates an MPEG2-PS after inserting the sub picture pack 302.

For example, when the sub picture pack 302 is inserted between the audio pack 301d and the video pack 301b, the SCR of the sub picture pack 302 needs to be selected so that the continuity of SCRs is established between the audio pack 301d, the sub picture pack 302, and the video pack 301b. Therefore, the subtitle information inserting unit 108 of this embodiment selects an average value of the SCRs of the audio pack 301d and the video pack 301b as the SCR of the sub picture pack 302.

As described above, according to this embodiment, by selecting an average value of the SCRs of packs before and after an inserted sub picture pack as the SCR of the sub picture pack, an empty pack for inserting a sub picture pack does not have to be generated. In this case, the continuity of SCRs before and after the inserted sub picture pack can be maintained.

Although an average value of the SCRs of packs before and after an inserted sub picture pack is selected as the SCR of the sub picture pack in this embodiment, selecting means other than the average value may be used.

Although a DVD-RAM is used as the storage medium recorded by the data recording unit 109 in each of the embodiments described above, a storage medium such as a DVD-R, a DVD-RW, a DVD+R, a DVD+RW, an HD (Hard Disc) may be used, or alternatively, a semiconductor memory such as an SD memory card (Secure Digital memory card), a USB (Universal Serial Bus) memory may be used.

Although the DVD-VR standards are used as an application format of a DVD to be recorded in each of the embodiments described above, other application formats having subtitle information, such as the DVD-Video standards, the DVD+VR (Video Recording) standards may be used.

Although the DVB-T standards are used for a stream to be input to the stream input unit 102 in each of the embodiments described above, other stream standards such as the ARIB standards, the H.264 standards may be used.

### INDUSTRIAL APPLICABILITY

In the video/audio recording/reproducing apparatus of the present invention, subtitle information contained in a transport stream is converted into a program stream of subtitle information, and the program stream of subtitle information is recorded. As a result, it is advantageously possible to switch between displaying and hiding the subtitle information and select languages to be displayed during reproduction. Therefore, the present invention is useful for video/audio recording/reproducing apparatuses which record a transport stream containing subtitle information as a program stream.

## Claims

1. A video/audio recording/reproducing apparatus (101) for recording an MPEG program stream of subtitle information in a single or a plurality of languages into a storage medium, comprising:
a stream input unit (102) configured to receive an MPEG transport stream containing program specifying information, subtitle information, and video/audio information;
a subtitle information extracting unit (104) configured to separate the MPEG transport stream received by the stream input unit into the subtitle information and the information other than the subtitle information;
a stream format converting unit (105) configured to convert the video/audio information of the MPEG transport stream separated by the subtitle information extracting unit into an MPEG program stream (301) of video/audio,
**characterized by**
a subtitle format converting unit (107) configured to convert the subtitle information separated by the subtitle information extracting unit into an MPEG program stream of subtitle information;
a subtitle information inserting unit (108) configured to insert the subtitle information MPEG program stream converted by the subtitle format converting unit, into the MPEG program stream converted by the stream format converting unit; and
a data recording unit (109) configured to record the MPEG program stream output by the subtitle information inserting unit.

2. The video/audio recording/reproducing apparatus of claim 1, further comprising:
a program specifying information acquiring unit (103) configured to acquire the program specifying information of the MPEG transport stream received by the stream input unit,
wherein
the subtitle information extracting unit uses the program specifying information to separate the MPEG transport stream into the subtitle information in a single or a plurality of languages and the information including the video/audio information other than the subtitle information.

3. The video/audio recording/reproducing apparatus of claim 2, further comprising:
a time information acquiring unit (106) configured to acquire reproduction time control information provided at a header of the MPEG program stream converted by the stream format converting unit, and notify the subtitle format converting unit of the reproduction time control information,
wherein
the program specifying information acquiring unit is configured to notify the subtitle information extracting unit of the reproduction time control information of the MPEG transport stream and the number of pieces of subtitle identification information,
the subtitle information extracting unit is configured to acquire the reproduction time control information, and notify the subtitle format converting unit of the number of pieces of subtitle identification information, and
the subtitle format converting unit is configured to use the notified reproduction time control information and the notified number of pieces of subtitle identification information to convert the subtitle information in a single or a plurality of languages into a MPEG program stream of subtitle information.

4. The video/audio recording/reproducing apparatus of claim 1, wherein
the stream format converting unit has a function of generating an empty pack for inserting subtitle information into a MPEG program stream, and is capable of selecting whether to generate the empty pack.

5. The video/audio recording/reproducing apparatus of claim 4, wherein
the stream format converting unit generates the empty pack for inserting subtitle information into a MPEG program stream to adjust a rate at which video and audio are recorded within a range required by specifications.

6. The video/audio recording/reproducing apparatus of claim 4, wherein
the stream format converting unit calculates the number of empty packs which can be inserted within a range required by specifications for a MPEG program stream, based on a rate at which video and audio are recorded, and generates the number of empty packs.

7. The video/audio recording/reproducing apparatus of claim 1, wherein
the subtitle format converting unit converts subtitle information to be displayed in a single or a plurality of regions and subtitle information in a plurality of languages into a MPEG program stream of subtitle information.

8. The video/audio recording/reproducing apparatus of claim 7, wherein
the subtitle format converting unit generates identification information for a MPEG program stream of subtitle information the number of which is equal to the number of pieces of subtitle identification information in a MPEG transport stream, and converts the identification information for a MPEG program stream of subtitle information into a MPEG program stream.

9. The video/audio recording/reproducing apparatus of claim 8, wherein the subtitle format converting unit, when a plurality of pieces of subtitle information are contained in a piece of subtitle information designated by subtitle identification information, generates identification information for a MPEG program stream of subtitle information the number of which is equal to the number of the plurality of pieces of subtitle information, and converts the identification information for a MPEG program stream of subtitle information into a MPEG program stream.

10. The video/audio recording/reproducing apparatus of claim 7, wherein
the subtitle format converting unit calculates a difference between reproduction time control information provided at a header of a MPEG program stream and reproduction time control information provided at a header of a MPEG transport stream, and adds or subtracts the difference to or from reproduction time control information for a MPEG transport stream of subtitle information, to generate reproduction time control information for a MPEG program stream of subtitle information.

11. The video/audio recording/reproducing apparatus of claim 7, wherein
the subtitle format converting unit converts subtitle information which satisfies a predetermined condition, of subtitle information contained in a MPEG transport stream, into a MPEG program stream of subtitle information.

12. The video/audio recording/reproducing apparatus of claim 7, wherein
the subtitle format converting unit generates color display information for displaying a MPEG program stream of subtitle information based on color display information contained in subtitle information contained in a MPEG transport stream.

13. The video/audio recording/reproducing apparatus of claim 7, wherein
the subtitle format converting unit decompresses a bitmap of the MPEG transport stream of subtitle information which is compressed by a compression method for the MPEG transport stream of subtitle information, reconstructs the bitmap image based on color display information for the MPEG program stream, and recompresses the bitmap image using a compression method for the MPEG program stream of subtitle information, to generate the MPEG program stream of subtitle information.

14. The video/audio recording/reproducing apparatus of claim 7, wherein
the subtitle format converting unit generates display control information for a MPEG program stream of subtitle information based on display control information for a MPEG transport stream of subtitle information.

15. The video/audio recording/reproducing apparatus of claim 14, wherein
the subtitle format converting unit calculates and generates a display coordinate and a display region of a MPEG program stream of subtitle information based on a display coordinate and a display region of a MPEG transport stream of subtitle information.

16. The video/audio recording/reproducing apparatus of claim 14, wherein
the subtitle format converting unit converts a plurality of pieces of subtitle information to be displayed at a plurality of positions, of a MPEG transport stream of subtitle information, as a single piece of subtitle information into a MPEG program stream of subtitle information.

17. The video/audio recording/reproducing apparatus of claim 4, wherein
the subtitle information inserting unit, when the MPEG program stream of subtitle information generated by the subtitle format converting unit is present in the empty pack, replaces a portion other than a header of the empty pack with subtitle information, and when the MPEG program stream of subtitle information is not present, replaces the portion other than the header of the empty pack with null data.

18. The video/audio recording/reproducing apparatus of claim 4, wherein
the subtitle information inserting unit, when the empty pack is not present in the MPEG program stream output by the stream format converting unit, inserts the MPEG program stream of subtitle information output by the subtitle format converting unit, as a subtitle information pack, into between video or audio packs of the MPEG program stream output by the stream format converting unit.

19. The video/audio recording/reproducing apparatus of claim 18, wherein
the subtitle information inserting unit calculates and generates time reference information of the MPEG program stream of subtitle information to be inserted, based on time reference information of video or audio packs before and after the MPEG program stream of subtitle information to be inserted.

## Patentansprüche

1. Video-/Audio-Aufzeichnungs-/Wiedergabe-Vorrichtung (101) zum Aufzeichnen eines MPEG-Programmstreams von Untertitelinformation in einer einzigen oder einer Mehrzahl von Sprachen auf einem Speichermedium, umfassend:
eine Streameingabeeinheit (102), die ausgelegt ist zum Empfangen eines MPEG-Transportstreams, der Programmspezifizierungsinformation, Untertitelinformation und Video-/Audio-Information enthält;
eine Untertitelinformationsextrahierungseinheit (104), die ausgelegt ist zum Trennen des MPEG-Transportstreams, der von der Streameingabeeinheit empfangen wird, in die Untertitelinformation und diejenige Information, die nicht die Untertitelinformation ist;
eine Streamformatumwandlungseinheit (105), die ausgelegt ist zum Umwandeln der Video-/Audio-Information des MPEG-Transportstreams, der von der Untertitelinformationsextrahierungseinheit getrennt wird, in einen MPEG-Programmstream (301) von Video/Audio,
**gekennzeichnet durch**
eine Untertitelformatumwandlungseinheit (107), die ausgelegt ist zum Umwandeln der Untertitelinformation, die von der Untertitelinformationsextrahierungseinheit getrennt wird, in einen MPEG-Programmstream von Untertitelinformation;
eine Untertitelinformationseinfügungseinheit (108), die ausgelegt ist zum Einfügen des Untertitelinformations-MPEG-Programmstreams, der von der Untertitelformatumwandlungseinheit umgewandelt wird, in den MPEG-Programmstream, der von der Streamformatumwandlungseinheit umgewandelt wird; und
eine Datenaufzeichnungseinheit (109), die ausgelegt ist zum Aufzeichnen des MPEG-Programmstreams, der von der Untertitelinformationseinfügungseinheit ausgegeben wird.

2. Video-/Audio-Aufzeichnungs-/Wiedergabe-Vorrichtung nach Anspruch 1, des Weiteren umfassend:
eine Programmspezifizierungsinformationsermittlungseinheit (103), die ausgelegt ist zum Ermitteln der Programmspezifizierungsinformation des MPEG-Transportstreams, der von der Streameingabeeinheit empfangen wird,
wobei:
die Untertitelinformationsextrahierungseinheit die Programmspezifizierungsinformation zum Trennen des MPEG-Transportstreams in die Untertitelinformation in einer einzigen oder einer Mehrzahl von Sprachen und die Information, die die Video-/Audio-Information beinhaltet, die nicht die Untertitelinformation ist, verwendet.

3. Video-/Audio-Aufzeichnungs-/Wiedergabe-Vorrichtung nach Anspruch 2, des Weiteren umfassend:
eine Zeitinformationsermittlungseinheit (106), die ausgelegt ist zum Ermitteln einer Wiedergabezeitsteuerungsinformation, die an einem Header des MPEG-Programmstreams vorgesehen ist, der von der Streamformatumwandlungseinheit umgewandelt wird, und Benachrichtigen der Untertitelformatumwandlungseinheit über die Wiedergabezeitsteuerungsinformation,
wobei:
die Programmspezifizierungsinformationsermittlungseinheit ausgelegt ist zum Benachrichtigen der Untertitelinformationsextrahierungseinheit über die Wiedergabezeitsteuerungsinformation des MPEG-Transportstreams und die Anzahl von Stücken von Untertitelidentifizierungsinformation,
die Untertitelinformationsextrahierungseinheit ausgelegt ist zum Ermitteln der Wiedergabezeitsteuerungsinformation und Benachrichtigen der Untertitelformatumwandlungseinheit über die Anzahl von Stücken von Untertitelidentifizierungsinformation und
die Untertitelformatumwandlungseinheit ausgelegt ist zum Verwenden der benachrichtigungsübermittelten Wiedergabezeitsteuerungsinformation und der benachrichtigungsübermittelten Anzahl von Stücken von Untertitelidentifizierungsinformation zum Umwandeln der Untertitelinformation in einer einzigen oder einer Mehrzahl von Sprachen in einen MPEG-Programmstream von Untertitelinformation.

4. Video-/Audio-Aufzeichnungs-/Wiedergabe-Vorrichtung nach Anspruch 1, wobei: die Streamformatumwandlungseinheit eine Funktion des Erzeugens einer leeren Packung zum Einfügen von Untertitelinformation in einen MPEG-Programmstream aufweist und in der Lage ist auszuwählen, ob die leere Packung erzeugt werden soll.

5. Video-/Audio-Aufzeichnungs-/Wiedergabe-Vorrichtung nach Anspruch 4, wobei: die Streamformatumwandlungseinheit die leere Packung zum Einfügen von Untertitelinformation in einen MPEG-Programmstream zum Anpassen einer Rate erzeugt, bei der Video und Audio innerhalb eines durch Spezifizierungen angeforderten Bereiches aufgezeichnet werden.

6. Video-/Audio-Aufzeichnungs-/Wiedergabe-Vorrichtung nach Anspruch 4, wobei:
die Streamformatumwandlungseinheit die Anzahl von leeren Packungen berechnet, die innerhalb eines von Spezifizierungen für einen MPEG-Programmstream angeforderten Bereiches auf Grundlage einer Rate, bei der Video und Audio aufgezeichnet werden, eingefügt werden können, und die Anzahl von leeren Packungen erzeugt.

7. Video-/Audio-Aufzeichnungs-/Wiedergabe-Vorrichtung nach Anspruch 1, wobei:
die Untertitelformatumwandlungseinheit Untertitelinformation, die in einem einzigen oder einer Mehrzahl von Bereichen angezeigt werden soll, und Untertitelinformation in einer Mehrzahl von Sprachen in einen MPEG-Programmstream von Untertitelinformation umwandelt.

8. Video-/Audio-Aufzeichnungs-/Wiedergabe-Vorrichtung nach Anspruch 7, wobei:
die Untertitelformatumwandlungseinheit Identifizierungsinformation für einen MPEG-Programmstream von Untertitelinformation mit einer Anzahl gleich der Anzahl von Stücken von Untertitelidentifizierungsinformation in einem MPEG-Transportstream erzeugt und die Identifizierungsinformation für einen MPEG-Programmstream von Untertitelinformation in einen MPEG-Programmstream umwandelt.

9. Video-/Audio-Aufzeichnungs-/Wiedergabe-Vorrichtung nach Anspruch 8, wobei:
die Untertitelformatumwandlungseinheit dann, wenn eine Mehrzahl von Stücken von Untertitelinformation in einem Stück von Untertitelinformation mit Bezeichnung durch eine Untertitelidentifizierungsinformation enthalten ist, Identifizierungsinformation für einen MPEG-Programmstream von Untertitelinformation mit einer Anzahl gleich der Anzahl der Mehrzahl von Stücken von Untertitelinformation erzeugt und die Identifizierungsinformation für einen MPEG-Programmstream von Untertitelinformation in einen MPEG-Programmstream umwandelt.

10. Video-/Audio-Aufzeichnungs-/Wiedergabe-Vorrichtung nach Anspruch 7, wobei:
die Untertitelformatumwandlungseinheit eine Differenz zwischen einer Wiedergabezeitsteuerungsinformation, die an einem Header eines MPEG-Programmstreams vorgesehen ist, und einer Wiedergabezeitsteuerungsinformation, die an einem Header eines MPEG-Transportstreams vorgesehen ist, berechnet und die Differenz zu der Wiedergabezeitsteuerungsinformation für einen MPEG-Transportstream von Untertitelinformation addiert oder diese hiervon subtrahiert, um eine Wiedergabezeitsteuerungsinformation für einen MPEG-Programmstream von Untertitelinformation zu erzeugen.

11. Video-/Audio-Aufzeichnungs-/Wiedergabe-Vorrichtung nach Anspruch 7, wobei:
die Untertitelformatumwandlungseinheit einer vorbestimmten Bedingung genügende Untertitelinformation aus Untertitelinformation, die in einem MPEG-Transportstream enthalten ist, in einen MPEG-Programmstream von Untertitelinformation umwandelt.

12. Video-/Audio-Aufzeichnungs-/Wiedergabe-Vorrichtung nach Anspruch 7, wobei:
die Untertitelformatumwandlungseinheit Farbanzeigeinformation zum Anzeigen eines MPEG-Programmstreams von Untertitelinformation auf Grundlage von Farbanzeigeinformation, die in Untertitelinformation enthalten ist, die in einem MPEG-Transportstream enthalten ist, erzeugt.

13. Video-/Audio-Aufzeichnungs-/Wiedergabe-Vorrichtung nach Anspruch 7, wobei:
die Untertitelformatumwandlungseinheit eine Bitmap des MPEG-Transportstreams von Untertitelinformation mit Kompression durch ein Kompressionsverfahren für den MPEG-Transportstream von Untertitelinformation dekomprimiert, das Bitmapbild auf Grundlage von Farbanzeigeinformation für den MPEG-Programmstream wiederherstellt und das Bitmapbild unter Verwendung eines Kompressionsverfahrens für den MPEG-Programmstream von Untertitelinformation erneut komprimiert, um den MPEG-Programmstream von Untertitelinformation zu erzeugen.

14. Video-/Audio-Aufzeichnungs-/Wiedergabe-Vorrichtung nach Anspruch 7, wobei:
die Untertitelformatumwandlungseinheit Anzeigesteuerungsinformation für einen MPEG-Programmstream von Untertitelinformation auf Grundlage einer Anzeigesteuerungsinformation für einen MPEG-Transportstream von Untertitelinformation erzeugt.

15. Video-/Audio-Aufzeichnungs-/Wiedergabe-Vorrichtung nach Anspruch 14, wobei:
die Untertitelformatumwandlungseinheit eine Anzeigekoordinate und einen Anzeigebereich eines MPEG-Programmstreams von Untertitelinformation auf Grundlage einer Anzeigekoordinate und eines Anzeigebereiches eines MPEG-Transportstreams von Untertitelinformation berechnet und erzeugt.

16. Video-/Audio-Aufzeichnungs-/Wiedergabevorrichtung nach Anspruch 14, wobei:
die Untertitelformatumwandlungseinheit eine Mehrzahl von Stücken von Untertitelinformation zur Anzeige an einer Mehrzahl von Positionen von einem MPEG-Transportstream von Untertitelinformation als ein einziges Stück von Untertitelinformation in einen MPEG-Programmstream von Untertitelinformation umwandelt.

17. Video-/Audio-Aufzeichnungs-/Wiedergabe-Vorrichtung nach Anspruch 4, wobei:
die Untertitelinformationsumwandlungseinheit dann, wenn der MPEG-Programmstream von Untertitelinformation aus der Erzeugung durch die Untertitelformatumwandlungseinheit in der leeren Packung vorhanden ist, einen Abschnitt, der nicht ein Header der leeren Packung ist, durch Untertitelinformation ersetzt und dann, wenn der MPEG-Programmstream von Untertitelinformation nicht vorhanden ist, den Abschnitt, der nicht der Header der leeren Packung ist, durch Nulldaten ersetzt.

18. Video-/Audio-Aufzeichnungs-/Wiedergabe-Vorrichtung nach Anspruch 4, wobei:
die Untertitelinformationseinfügungseinheit dann, wenn die leere Packung in dem MPEG-Programmstream aus der Ausgabe der Streamformatumwandlungseinheit nicht vorhanden ist, den MPEG-Programmstream von Untertitelinformation aus der Ausgabe der Untertitelformatumwandlungseinheit als Untertitelinformationspackung zwischen Video- oder Audiopackungen des MPEG-Programmstreams aus der Ausgabe der Streamformatumwandlungseinheit einfügt.

19. Video-/Audio-Aufzeichnungs-/Wiedergabe-Vorrichtung nach Anspruch 18, wobei:
die Untertitelinformationseinfügungseinheit Zeitbezugsinformation des MPEG-Programmstreams von Untertitelinformation zur Einfügung auf Grundlage von Zeitbezugsinformation von Video- oder Audiopackungen vor nach nach dem MPEG-Programmstream von Untertitelinformation zur Einfügung berechnet und erzeugt.

## Revendications

1. Appareil d'enregistrement/reproduction vidéo/audio (101) pour enregistrer sur un support d'enregistrement un flux de programme MPEG d'informations de sous-titre dans une langue ou une pluralité de langues, comprenant :
une unité d'entrée de flux (102) configurée pour recevoir un flux de transport MPEG contenant des informations de spécification de programme, des informations de sous-titre et des informations vidéo/audio ;
une unité d'extraction d'informations de sous-titre (104) configurée pour séparer le flux de transport MPEG reçu par l'unité d'entrée de flux en informations de sous-titre et informations autres que des informations de sous-titre ;
une unité de conversion de format de flux (105) configurée pour convertir en un flux de programme MPEG (301) de vidéo/audio les informations vidéo/audio du flux de transport MPEG séparées par l'unité d'extraction d'informations de sous-titre,
**caractérisé par**
une unité de conversion de format de sous-titre (107) configurée pour convertir en flux de programme MPEG d'informations de sous-titre les informations de sous-titre séparées par l'unité d'extraction d'informations de sous-titre ;
une unité d'insertion d'informations de sous-titre (108) configurée pour insérer le flux de programme MPEG d'informations de sous-titre converties par l'unité de conversion de format de sous-titre dans le flux de programme MPEG converti par l'unité de conversion de format de flux ; et
une unité d'enregistrement de données (109) configurée pour enregistrer le flux de programme MPEG fourni en sortie par l'unité d'insertion d'informations de sous-titre.

2. Appareil d'enregistrement/reproduction vidéo/audio selon la revendication 1, comprenant en outré :
une unité d'acquisition d'informations de spécification de programme (103) configurée pour acquérir les informations de spécification de programme du flux de transport MPEG reçu par l'unité d'entrée de flux,
dans lequel
l'unité d'extraction d'informations de sous-titre utilise les informations de spécification de programme pour séparer le flux de transport MPEG en informations de sous-titre dans une seule langue ou dans une pluralité de langues et les informations incluant les informations vidéo/audio autres que les informations de sous-titre.

3. Appareil d'enregistrement/reproduction vidéo/audio selon la revendication 2, comprenant en outré :
une unité d'acquisition d'informations de temps (106) configurée pour acquérir des informations de contrôle de temps de reproduction fournies dans un en-tête du flux de programme MPEG converti par l'unité de conversion de format de flux et pour notifier à l'unité de conversion de format de sous-titre les informations de contrôle de temps de reproduction,
dans lequel
l'unité d'acquisition d'informations de spécification de programme est configurée pour notifier à l'unité d'extraction d'informations de sous-titre les informations de contrôle de temps de reproduction du flux de transport MPEG et le nombre d'éléments d'informations d'identification de sous-titre,
l'unité d'extraction d'informations de sous-titre est configurée pour acquérir les informations de contrôle de temps de reproduction et pour notifier à l'unité de conversion de format de sous-titre le nombre d'éléments d'informations d'identification de sous-titre, et
l'unité de conversion de format de sous-titre est configurée pour utiliser les informations de contrôle de temps de reproduction notifiées et le nombre d'éléments d'informations d'identification de sous-titre notifié pour convertir en un flux de programme MPEG d'informations de sous-titre les informations de sous-titre dans une seule langue ou dans une pluralité de langues.

4. Appareil d'enregistrement/reproduction vidéo/audio selon la revendication 1, dans lequel
l'unité de conversion de format de flux possède une fonction de génération d'un paquet vide pour insérer des informations de sous-titre dans un flux de programme MPEG et est capable de sélectionner s'il faut générer le paquet vide.

5. Appareil d'enregistrement/reproduction vidéo/audio selon la revendication 4, dans lequel
l'unité de conversion de format de flux génère le paquet vide pour insérer des informations de sous-titre dans un flux de programme MPEG pour régler la vitesse à laquelle la vidéo et l'audio sont enregistrés dans une plage requise par les spécifications.

6. Appareil d'enregistrement/reproduction vidéo/audio selon la revendication 4, dans lequel
l'unité de conversion de format de flux calcule le nombre de paquets vides pouvant être insérés dans une plage requise par les spécifications pour un flux de programme MPEG, en se basant sur la vitesse à laquelle sont enregistrées les informations vidéo et audio et génère le nombre de paquets vides.

7. Appareil d'enregistrement/reproduction vidéo/audio selon la revendication 1, dans lequel
l'unité de conversion de format de sous-titre convertit en un flux de programme MPEG d'informations de sous-titre les informations de sous-titre destinées à être affichées dans une seule ou dans une pluralité de régions et les informations de sous-titre dans une pluralité de langues.

8. Appareil d'enregistrement/reproduction vidéo/audio selon la revendication 7, dans lequel
l'unité de conversion de format de sous-titre génère des informations d'identification pour un flux de programme MPEG d'informations de sous-titre dont le nombre est égal au nombre d'éléments d'informations d'identification de sous-titre dans un flux de transport MPEG et convertit en un flux de programme MPEG les informations d'identification pour un flux de programme MPEG d'informations de sous-titre.

9. Appareil d'enregistrement/reproduction vidéo/audio selon la revendication 8, dans lequel
lorsqu'une pluralité d'éléments d'informations de sous-titre sont contenues dans un élément d'information de sous-titre désigné par des informations d'identification de sous-titre, l'unité de conversion de format de sous-titre génère des informations d'identification pour un flux de programme MPEG d'informations de sous-titre dont le nombre est égal au nombre de la pluralité d'éléments d'informations de sous-titre et convertit en un flux de programme MPEG les informations d'identification pour un flux de programme MPEG d'informations de sous-titre.

10. Appareil d'enregistrement/reproduction vidéo/audio selon la revendication 7, dans lequel
l'unité de conversion de format de sous-titre calcule la différence entre les informations de contrôle de temps de reproduction fournies dans un en-tête du flux de programme MPEG et les informations de contrôle de temps de reproduction fournies dans un en-tête du flux de transport MPEG et ajoute ou soustrait la différence aux ou des informations de contrôle de temps de reproduction pour un flux de transport MPEG ou des informations de sous-titre pour générer des informations de contrôle de temps de reproduction pour un flux de programme MPEG d'informations de sous-titre.

11. Appareil d'enregistrement/reproduction vidéo/audio selon la revendication 7, dans lequel
l'unité de conversion de format de sous-titre convertit en un flux de programmes MPEG d'informations de sous-titre des informations de sous-titre satisfaisant à une condition prédéterminée des informations de sous-titre contenues dans un flux de transport MPEG.

12. Appareil d'enregistrement/reproduction vidéo/audio selon la revendication 7, dans lequel
l'unité de conversion de format de sous-titre génère des informations d'affichage couleur pour afficher un flux de programme MPEG d'informations de sous-titre en se basant sur des informations d'affichage couleur contenues dans des informations de sous-titre contenues dans un flux de transport MPEG.

13. Appareil d'enregistrement/reproduction vidéo/audio selon la revendication 7, dans lequel
l'unité de conversion de format de sous-titre décompresse un bitmap du flux de transport MPEG d'informations de sous-titre qui est compressé par un procédé de compression du flux de transport MPEG d'informations de sous-titre, reconstruit l'image bitmap en se basant sur les informations d'affichage couleur pour le flux de programme MPEG et recompresse l'image bitmap en utilisant un procédé de compression pour le flux de programme MPEG d'informations de sous-titre pour générer le flux de programme MPEG d'informations de sous-titre.

14. Appareil d'enregistrement/reproduction vidéo/audio selon la revendication 7, dans lequel
l'unité de conversion de format de sous-titre génère des informations de contrôle d'affichage pour un flux de programme MPEG d'informations de sous-titre en se basant sur les informations de contrôle d'affichage pour un flux de transport MPEG d'informations de sous-titre.

15. Appareil d'enregistrement/reproduction vidéo/audio selon la revendication 14, dans lequel
l'unité de conversion de format de sous-titre calcule et génère des coordonnées d'affichage et une région d'affichage d'un flux de programme MPEG d'informations de sous-titre en se basant sur les coordonnées d'affichage et une région d'affichage d'un flux de transport MPEG d'informations de sous-titre.

16. Appareil d'enregistrement/reproduction vidéo/audio selon la revendication 14, dans lequel
l'unité de conversion de format de sous-titre convertit en un flux de programme MPEG d'informations de sous-titre une pluralité d'éléments d'informations de sous-titre destinées à être affichées dans une pluralité de positions d'un flux de transport MPEG d'informations de sous-titre sous forme d'un seul élément d'information de sous-titre.

17. Appareil d'enregistrement/reproduction vidéo/audio selon la revendication 4, dans lequel
lorsque le flux de programme MPEG d'informations de sous-titre généré par l'unité de conversion de format de sous-titre est présent dans le paquet vide, l'unité d'insertion d'informations de sous-titre remplace une partie autre qu'un en-tête du paquet vide par des informations de sous-titre et lorsque le flux de programme MPEG d'informations de sous-titre n'est pas présent, remplace la partie autre que l'en-tête du paquet vide par des données nulles.

18. Appareil d'enregistrement/reproduction vidéo/audio selon la revendication 4, dans lequel
lorsque le paquet vide n'est pas présent dans le flux de programme MPEG fourni en sortie par l'unité de conversion de format de flux, l'unité d'insertion d'informations de sous-titre insère le flux de programme MPEG d'informations de sous-titre fourni en sortie par l'unité de conversion de format de sous-titre, en tant que paquet d'informations de sous-titre, entre les paquets vidéo ou audio du flux de programme MPEG fourni en sortie par l'unité de conversion de format de flux.

19. Appareil d'enregistrement/reproduction vidéo/audio selon la revendication 18, dans lequel
l'unité d'insertion d'informations de sous-titre calcule et génère des informations de référence de temps du flux de programme MPEG des informations de sous-titre destinées à être insérées, en se basant sur les informations de référence de temps des paquets vidéo ou audio avant et après avoir inséré le flux de programme MPEG d'informations de sous-titre.
